# EUROPÄISCHE PATENTSCHRIFT

(11) **EP 1 702 807 B1**
(45) Veröffentlichungstag und Bekanntmachung des Hinweises auf die Patenterteilung: **28.09.2016**
(21) Anmeldenummer: 06100748.0
(22) Anmeldetag: 24.01.2006
(51) Int. Cl.: B60R 16/02, H02J 1/10

(54) **Verfahren und Vorrichtung für eine Gleichspannungsversorgung, die mehrere parallel geschaltete Generatoren umfasst**
Method and device for a direct current supply comprising several generators in parallel operation
Procédé et dispositif d'alimentation en tension continue comprenant plusieurs générateurs connectés en parallèle

(30) Priorität: 17.03.2005 DE 102005012270
(43) Veröffentlichungstag der Anmeldung: 20.09.2006
(73) Patentinhaber: ROBERT BOSCH GMBH, 70442 Stuttgart (DE)
(72) Erfinder: Labitzke, Herbert, 71706 Markgroeningen (DE); Suelzle, Helmut, 71691 Freiberg (DE)

(56) Entgegenhaltungen:
- EP-A- 1 511 151
- DE-A1-102004 051 742
- US-A- 4 658 200
- US-A- 5 254 936
- US-A- 5 723 972

## Beschreibung

Die Erfindung betrifft ein Verfahren und eine Vorrichtung zur Bereitstellung der Versorgungsspannung für die Verbraucher eines Fahrzeug-Bordnetzes unter Verwendung mehrerer Generatoren.

### Stand der Technik

Es ist bereits bekannt, das elektrische Bordnetz eines Kraftfahrzeugs unter Verwendung eines Generators zu versorgen.

Weiterhin ist es bereits bekannt, das Bordnetz bestimmter Fahrzeuge, beispielsweise von Sicherheitsfahrzeugen, Rettungsfahrzeugen und Nutzfahrzeugen, unter Verwendung von mindestens zwei Generatoren mit Energie zu versorgen, um den geforderten Leistungsbedarf und/oder die geforderte Zuverlässigkeit der elektrischen Versorgung gewährleisten zu können.

Der Verschleiß und damit auch die Lebensdauer eines Generators hängt von mehreren Faktoren ab. Einer dieser Faktoren ist seine elektrische Auslastung. Je höher die elektrische Auslastung eines Generators ist, desto größer ist sein Verschleiß und desto niedriger ist seine restliche Lebensdauer. Es ist deshalb wünschenswert, bei Vorrichtungen zur Bereitstellung der Versorgungsspannung für die Verbraucher eines Fahrzeug-Bordnetzes unter Verwendung mehrerer Generatoren dafür Sorge zu tragen, dass der Auslastungsgrad der verwendeten Generatoren gleich ist.

Aus der DE 41 08 861 A1 ist bereits eine Einrichtung mit parallel geschalteten Generatoren bekannt. Bei dieser bekannten Einrichtung ist jedem der Generatoren ein Spannungsregler zugeordnet. Weiterhin weist die bekannte Einrichtung mindestens eine Batterie auf, deren einer Anschluss über einen Zündschalter mit dem Spannungsregler verbindbar ist. Ferner ist eine Ladekontrolleinrichtung vorgesehen, die mit dem Zündschalter und den Spannungsreglern in Verbindung steht und über ein Schaltmittel mit dem vorzugsweise auf Masse liegenden negativen Anschluss der Batterie verbindbar ist. Zwischen der Ladekontrolleinrichtung, den Spannungsreglern und dem genannten Schaltmittel liegt eine Schaltungsanordnung mit mehreren in einer Richtung leitenden und in einer Richtung sperrenden Bauelementen. Durch diese bekannte Einrichtung soll erreicht werden, dass durch den Einsatz zweier Generatoren eine hohe elektrische Leistung erzeugt werden kann und dass mit einer einzigen Anzeige, beispielsweise einer Ladekontrolllampe, auftretende Fehler in einem der beiden Generator-Spannungsregler-Systeme angezeigt werden können, wobei das andere Generator-Spannungsregler-System problemlos weiterarbeiten kann.

Aus der US 5 723 972 A ist ein Fahrzeugbordnetz mit mehreren Generatoren sowie zugeordneten Spannungsreglern bekannt, bei dem ein erster Spannungsregler als Master-Regler arbeitet und das von ihm generierte Steuersignal auch den übrigen Spannungsreglern zur Verfügung stellt. Die Funktionsfähigkeit der weitere Spannungsregler wird mit Hilfe von Plausibilitätsuntersuchungen überwacht. Der Hauptregler wird dagegen so ausgestaltet, dass er sehr zuverlässig ist und nicht ausfallen kann.

Aus der EP A1 511151 ist ein Spannungsregelungssystem bekannt, bei dem ein Haupt- und wenigstens ein Hilfsregler vorhanden sind. Der Hauptregler wird auf Funktionsfähigkeit überwacht. Bei fehlender Funktionsfähigkeit werden alternative Regelungen mit Hilfe des Hilfsreglers oder der Hilfsregler durchgeführt.

Die US 5 254 936 A und die DE 10 2004 051 742 A1 beschreiben weitere Mehrspannungsgeneratorsysteme in Kraftfahrzeugen, die mit Hilfe zugehöriger Spannungsregler geregelt werden. Die Generatoren sind dabei jeweils parallel geschaltet und werden gegebenenfalls so geregelt, dass eine gleichmäßige Lastverteilung erhalten wird.

Die US 4 658 200 A zeigt eine Schutzschaltung für einen einem Generator zugeordneten Spannungsregler.

### Vorteile der Erfindung

Ein Verfahren und eine Vorrichtung gemäß der Erfindung weisen dem gegenüber den Vorteil auf, dass der Auslastungsgrad der in der Vorrichtung vorhandenen Generatoren gleich ist. Durch das beanspruchte Vorgehen werden unter anderem fertigungs- und abgleichbedingte Streuungen der der Vorrichtung zugehörigen Regler-/Generator-Einheiten ausgeglichen.

Diese Vorteile werden erfindungsgemäß dadurch erreicht, dass das in einem der Regler generierte impulsbreitenmodulierte Steuersignal oder ein daraus abgeleitetes, das Tastverhältnis des impulsbreitenmodulierten Signals beschreibendes Steuersignal nicht nur zur Ansteuerung des dem Regler zugehörigen Endstufentransistors verwendet wird, sondern auch den weiteren Reglern zugeführt und auch zur Ansteuerung der Endstufentransistoren dieser weiteren Regler verwendet wird. Dabei überwachen die weiteren Regler jeweils das ihrem Endstufentransistor zugeführte Steuersignal. Wird das Vorliegen eines Fehlers erkannt, dann schalten die genannten weiteren Regler auf eine autarke Regelung um. Bei dieser autarken Regelung wird ein in einem der weiteren Regler selbst generiertes Steuersignal an den jeweils zugehörigen Endstufentransistor weitergeleitet.

Eine vorteilhafte Weiterbildung der Erfindung besteht darin, dass die weiteren Regler zum Erkennen eines Fehlerfalles zusätzlich ihren eigenen Spannungseingang überwachen. Dadurch wird die Zuverlässigkeit der Spannungsversorgung der Verbraucher des Bordnetzes weiter erhöht.

Weitere vorteilhafte Eigenschaften der Erfindung ergeben sich aus deren beispielhafter Erläuterung anhand der Figur.

### Figur

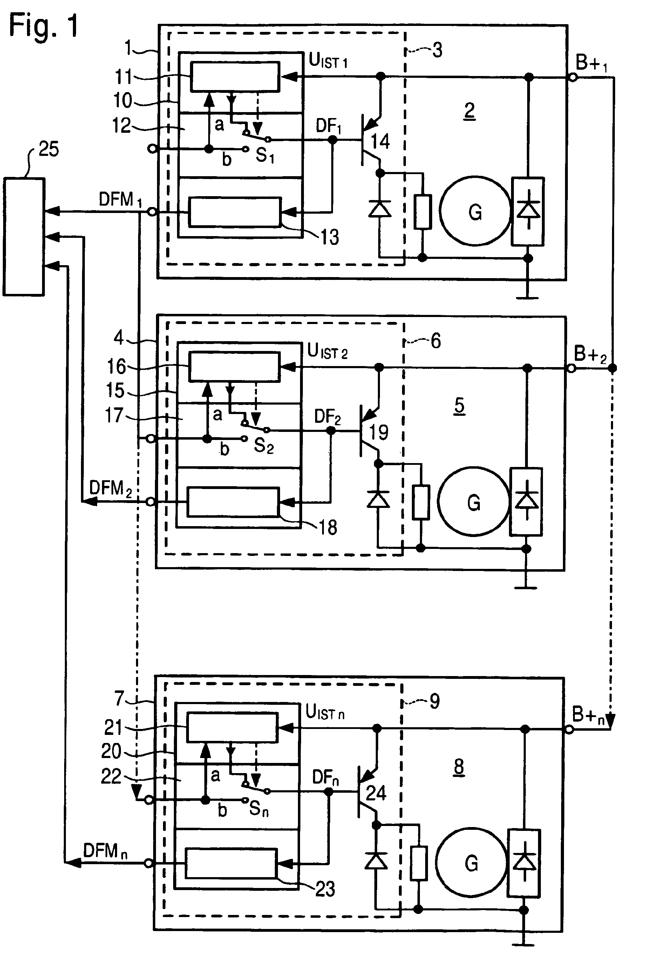

Die Figur 1 zeigt ein Ausführungsbeispiel für eine Vorrichtung zur Bereitstellung der Versorgungsspannung für die Verbraucher eines Fahrzeug-Bordnetzes unter Verwendung von mehreren Generatoren.

### Beschreibung

Die in der Figur 1 dargestellte Vorrichtung weist n zueinander parallel geschaltete Generatoreinheiten auf, die in der Figur mit den Bezugszahlen 1, 4 und 7 bezeichnet sind. Die an den Spannungsausgängen der Generatoreinheiten 1, 4 und 7 zur Verfügung gestellten Spannungswerte sind mit B+₁. B+₂ und B+ₙ bezeichnet. Diese Spannungswerte können voneinander abweichen aufgrund von fertigungs- und abgleichbedingten Streuungen der Generatoren und Regeleinheiten sowie aufgrund von unterschiedlichen Leitungswiderständen.

Die Generatoreinheit 1 weist einen ersten Generator 2 und eine erste Regeleinheit 3 auf. Der ersten Regeleinheit 3 gehören ein Regel-IC 10, ein mit diesem verbundener Endstufentransistor 14 und eine mit dem Kollektor des Endstufentransistors 14 verbundene Freilaufdiode an. Der Regel-IC 10 enthält eine Regellogik 11, eine Schalteinheit 12 und eine Rückführlogik 13. Die Regellogik 11 weist einen Eingang für ein an der Klemme b eines Schalters S₁ der Schalteinheit 12 anliegendes Steuersignal sowie einen Eingang für einen Spannungsistwert U_{IST1} auf. Ausgangsseitig stellt die Regellogik 11 ein Schaltersteuersignal für den Schalter S₁ sowie ein Steuersignal, welches dem Anschluss a des Schalters S₁ zugeführt wird, zur Verfügung. Das am Ausgang des Schalters S₁ generierte Steuersignal DF₁ ist ein impulsbreitenmoduliertes Steuersignal, welches der Basis des Endstufentransistors 14 der ersten Regeleinheit 3 zugeführt wird. Das Steuersignal DF₁ wird weiterhin an die Rückführlogik 13 des Regel-IC's 10 zurückgeführt. Diese Rückführlogik enthält gemäß einer Ausführungsform der Erfindung lediglich eine Entkopplungsstufe. Das am Ausgang der Rückführlogik 13 zur Verfügung gestellte Signal wird als Monitorsignal DFM₁ an ein Steuergerät 25 weitergeleitet und wird dort beispielsweise im Sinne einer Erfassung des Auslastungsgrades des ersten Generators 2 ausgewertet.

Der Generator 2 der ersten Generatoreinheit 1 ist in der Figur 1 durch einen parallel zur Freilaufdiode der Regeleinheit 3 angeordneten Läufer, einen Block G und eine Gleichrichtereinheit veranschaulicht. Am Ausgang der Gleichrichtereinheit steht die vom Generator 2 generierte Versorgungsgleichspannung zur Verfügung. Diese wird am Spannungsausgang B+₁ der ersten Generatoreinheit 1 bereitgestellt und liegt weiterhin am Emitter des Endstufentransistors 14 und als Spannungsistwert U_{IST1} am Spannungseingang der Regellogik 11 an.

Die Generatoreinheit 4 weist einen zweiten Generator 5 und eine zweite Regeleinheit 6 auf. Der zweiten Regeleinheit 6 gehören ein Regel-IC 15, ein mit diesem verbundener Endstufentransistor 19 und eine mit dem Kollektor des Endstufentransistors 19 verbundene Freilaufdiode an. Der Regel-IC 15 enthält eine Regellogik 16, eine Schalteinheit 17 und eine Rückführlogik 18. Die Regellogik 16 weist einen Eingang für ein an der Klemme b eines Schalters S₂ der Schalteinheit 17 anliegendes Steuersignal sowie einen Eingang für einen Spannungsistwert U_{IST2} auf. Ausgangsseitig stellt die Regellogik 16 ein Schaltersteuersignal für den Schalter S₂ sowie ein Steuersignal, welches dem Anschluss a des Schalters S₂ zugeführt wird, zur Verfügung. Das am Ausgang des Schalters S₂ generierte Steuersignal DF₂ ist ein impulsbreitenmoduliertes Steuersignal, welches der Basis des Endstufentransistors 19 der zweiten Regeleinheit 6 zugeführt wird. Das Steuersignal DF₂ wird weiterhin an die Rückführlogik 18 des Regel-IC's 15 zurückgeführt. Diese Rückführlogik enthält gemäß einer Ausführungsform der Erfindung lediglich eine Entkopplungsstufe. Das am Ausgang der Rückführlogik 18 zur Verfügung gestellte Signal wird als Monitorsignal DFM₂ an das Steuergerät 25 weitergeleitet und wird dort beispielsweise im Sinne einer Erfassung des Auslastungsgrades des zweiten Generators 5 ausgewertet.

Der Generator 5 der zweiten Generatoreinheit 4 ist in der Figur 1 durch einen parallel zur Freilaufdiode der Regeleinheit 6 angeordneten Läufer, einen Block G und eine Gleichrichtereinheit veranschaulicht. Am Ausgang der Gleichrichtereinheit steht die vom Generator 5 generierte Versorgungsgleichspannung zur Verfügung. Diese wird am Spannungsausgang B+₂ der zweiten Generatoreinheit 4 bereitgestellt und liegt weiterhin am Emitter des Endstufentransistors 19 und als Spannungsistwert U_{IST2} am Spannungseingang der Regellogik 16 an.

Die Generatoreinheit 7 weist einen n-ten Generator 8 und eine n-te Regeleinheit 9 auf. Der n-ten Regeleinheit 9 gehören ein Regel-IC 20, ein mit diesem verbundener Endstufentransistor 24 und eine mit dem Kollektor des Endstufentransistors 24 verbundene Freilaufdiode an. Der Regel-IC 20 enthält eine Regellogik 21, eine Schalteinheit 22 und eine Rückführlogik 23. Die Regellogik 21 weist einen Eingang für ein an der Klemme b eines Schalters Sₙ der Schalteinheit 22 anliegendes Steuersignal sowie einen Eingang für einen Spannungsistwert U_{ISTn} auf. Ausgangsseitig stellt die Regellogik 21 ein Schaltersteuersignal für den Schalter Sₙ sowie ein Steuersignal, welches dem Anschluss a des Schalters Sₙ zugeführt wird, zur Verfügung. Das am Ausgang des Schalters Sₙ generierte Steuersignal DFₙ ist ein impulsbreitenmoduliertes Steuersignal, welches der Basis des Endstufentransistors 24 der n-ten Regeleinheit 9 zugeführt wird. Das Steuersignal DFₙ wird weiterhin an die Rückführlogik 23 des Regel-IC's 20 zurückgeführt. Diese Rückführlogik enthält gemäß einer Ausführungsform der Erfindung lediglich eine Entkopplungsstufe. Das am Ausgang der Rückführlogik 23 zur Verfügung gestellte Signal wird als Monitorsignal DFMₙ an das Steuergerät 25 weitergeleitet und wird dort beispielsweise im Sinne einer Erfassung des Auslastungsgrades des n-ten Generators 8 ausgewertet.

Der Generator 8 der n-ten Generatoreinheit 7 ist in der Figur 1 durch einen parallel zur Freilaufdiode der Regeleinheit 9 angeordneten Läufer, einen Block G und eine Gleichrichtereinheit veranschaulicht. Am Ausgang der Gleichrichtereinheit steht die vom Generator 8 generierte Versorgungsgleichspannung zur Verfügung. Diese wird am Spannungsausgang B+ₙ der n-ten Generatoreinheit 8 bereitgestellt und liegt weiterhin am Emitter des Endstufentransistors 24 und als Spannungsistwert U_{ISTn} am Spannungseingang der Regellogik 21 an.

Weiterhin wird gemäß der vorliegenden Erfindung das in der ersten Regeleinheit 3 generierte impulsbreitenmodulierte Steuersignal oder ein daraus abgeleitetes, das Tastverhältnis dieses impulsbreitenmodulierten Steuersignals beschreibendes Steuersignal den Regeleinheiten 6 und 9 der Generatoreinheiten 4 und 7 zugeführt und wird auch dort zur Ansteuerung der Endstufentransistoren 19 und 24 der Regeleinheiten 6 und 9 verwendet.

Bei dem in der Figur 1 konkret dargestellten Ausführungsbeispiel wird das am Ausgang der Rückführlogik 13 des Regel-IC's 10 vorliegende Signal DFM₁ der Regeleinheit 6 der Generatoreinheit 4 und der Regeleinheit 9 der Generatoreinheit 7 zugeführt.

In der Regeleinheit 6 gelangt das Signal DFM₁ an den Anschluss b des Schalters S₂ der Schalteinheit 17. Im Normalbetrieb ist der Schalter S₂ für das am Anschluss b anliegende Signal durchlässig, so dass das Signal DFM₁ über den Schalter S₂ als impulsbreitenmoduliertes Steuersignal DF₂ an den Endstufentransistor 19 der zweiten Regeleinheit 6 weitergeleitet wird.

Das impulsbreitenmodulierte Steuersignal DF₂ des Endstufentransistors 19 liegt weiterhin an der Rückführlogik 18 des Regel-IC's 15 an. Diese Rückführlogik 18 weist lediglich eine Entkoppelstufe auf. Das am Ausgang der Rückführlogik 18 vorliegende Signal wird als Monitorsignal DFM₂ an das Steuergerät 25 weitergeleitet, in welchem anhand dieses Monitorsignals der Auslastungsgrad des zweiten Generators 5 ermittelt wird.

Weiterhin überwacht die Regellogik 16 das vom Anschluss b des Schalters S₂ abgeleitete Steuersignal und vorzugsweise auch den ihr zugeführten Spannungsistwert U_{IST2}. Liegen diese Werte außerhalb vorgegebener Grenzen, dann wird das Vorliegen eines Fehlers erkannt. Im Falle eines derartigen Fehlers generiert die Regellogik 16 ein Schaltersteuersignal für den Schalter S₂, welches den Schalter S₂ in seine Schaltstellung a umschaltet.

In dieser Schaltstellung a des Schalters S₂ wird nicht mehr das von der Regeleinheit 3 abgeleitete Signal DFM₁ an den Endstufentransistor 19 weitergeleitet, sondern ein von der Regellogik 16 selbst generiertes Steuersignal. Dieses Steuersignal ermittelt die Regellogik 16 durch einen Vergleich des rückgeführten Spannungsistwertes U_{IST2} mit einem vorgegebenen Sollwert für die Ausgangsspannung des Generators 5. Folglich erfolgt beim Vorliegen eines Fehlers eine Umschaltung auf eine autarke Regelung des Generators 5 mittels der Regeleinheit 6.

In der Regeleinheit 9 der n-ten Generatoreinheit 7 gelangt das Signal DFM₁ an den Anschluss b des Schalters Sₙ der Schalteinheit 22. Im Normalbetrieb ist der Schalter Sₙ für das am Anschluss b anliegende Signal durchlässig, so dass das Signal DFM₁ über den Schalter Sₙ als impulsbreitenmoduliertes Steuersignal DFₙ an den Endstufentransistor 24 der n-ten Regeleinheit 9 weitergeleitet wird.

Das impulsbreitenmodulierte Steuersignal DFₙ des Endstufentransistors 24 liegt weiterhin an der Rückführlogik 23 des Regel-IC's 20 an. Diese Rückführlogik 23 weist lediglich eine Entkoppelstufe auf. Das am Ausgang der Rückführlogik 23 vorliegende Signal wird als Monitorsignal DFMₙ an das Steuergerät 25 weitergeleitet, in welchem anhand dieses Monitorsignals der Auslastungsgrad des n-ten Generators 8 ermittelt wird.

Weiterhin überwacht die Regellogik 21 das vom Anschluss b des Schalters Sₙ abgeleitete Steuersignal und vorzugsweise auch den ihr zugeführten Spannungsistwert U_{ISTn}. Liegen diese Werte außerhalb vorgegebener Grenzen, dann wird das Vorliegen eines Fehlers erkannt. Im Falle eines derartigen Fehlers generiert die Regellogik 21 ein Schaltersteuersignal für den Schalter Sₙ, welches den Schalter Sₙ in seine Schaltstellung a umschaltet.

In dieser Schaltstellung a des Schalters Sₙ wird nicht mehr das von der Regeleinheit 3 abgeleitete Signal DFM₁ an den Endstufentransistor 24 weitergeleitet, sondern ein von der Regellogik 21 selbst generiertes Steuersignal. Dieses Steuersignal ermittelt die Regellogik 21 durch einen Vergleich des rückgeführten Spannungsistwertes U_{ISTn} mit einem vorgegebenen Sollwert für die Ausgangsspannung des Generators 8. Folglich erfolgt beim Vorliegen eines Fehlers eine Umschaltung auf eine autarke Regelung des Generators 8 mittels der Regeleinheit 9.

Gemäß der Erfindung wird nach alledem im fehlerfreien Normalbetrieb das in einer der Regeleinheiten generierte impulsbreitenmodulierte Steuersignal für den Endstufentransistor oder ein daraus abgeleitetes, das Tastverhältnis des impulsbreitenmodulierten Signals beschreibendes Steuersignal auch den Regeleinheiten der weiteren Generatoren zugeführt und wird auch dort zur Ansteuerung des jeweiligen Endstufentransistors verwendet. Dies hat den Vorteil, dass der Auslastungsgrad der parallel zueinander vorgesehenen Generatoren in Übereinstimmung gebracht wird. Bei diesem Vorgehen werden auch fertigungs- und abgleichbedingte Streuungen der eingesetzten Generatoreinheiten ausgeglichen. Dies führt insgesamt zur einer Verlängerung der Lebensdauer der Generatoren und damit auch der Gesamtvorrichtung zur Bereitstellung der Versorgungsspannung für die Verbraucher eines Fahrzeugbordnetzes.

Gemäß einer vorteilhaften Weiterbildung der Erfindung kann das aus dem impulsbreitenmodulierten Steuersignal für den Endstufentransistor abgeleitete Steuersignal, das das Tastverhältnis des impulsbreitenmodulierten Steuersignals beschreibt und zur Ansteuerung der Endstufentransistoren der weiteren Regeleinheiten bzw. Generatoren verwendet wird, ein invertiertes Signal, ein zeitverschobenes Signal oder ein gefiltertes, beispielsweise tiefpassgefiltertes, Signal sein.

Weiterhin weist gemäß dem in der Figur 1 gezeigten Ausführungsbeispiel jede der Regeleinheiten einen Endstufentransistor auf. Die Erfindung ist jedoch ebenso verwendbar, wenn eine oder mehrere der vorhandenen Regeleinheiten mit mehr als einem Endstufentransistor ausgestattet sind.

### Bezugszeichenliste:

- 1: Erste Generatoreinheit
- 2: Erster Generator
- 3: Erste Regeleinheit
- 4: Zweite Generatoreinheit
- 5: Zweiter Generator
- 6: Zweite Regeleinheit
- 7: n-te Generatoreinheit
- 8: n-ter Generator
- 9: n-te Regeleinheit
- 10: Regel-IC der ersten Regeleinheit
- 11: Regellogik der ersten Regeleinheit
- 12: Schalteinheit der ersten Regeleinheit
- 13: Rückführlogik der ersten Regeleinheit
- 14: Endstufentransistor der ersten Regeleinheit
- 15: Regel-IC der zweiten Regeleinheit
- 16: Regellogik der zweiten Regeleinheit
- 17: Schalteinheit der zweiten Regeleinheit
- 18: Rückführlogik der zweiten Regeleinheit
- 19: Endstufentransistor der zweiten Regeleinheit
- 20: Regel-IC der n-ten Regeleinheit
- 21: Regellogik der n-ten Regeleinheit
- 22: Schalteinheit der n-ten Regeleinheit
- 23: Rückführlogik der n-ten Regeleinheit
- 24: Endstufentransistor der n-ten Regeleinheit
- 25: Steuergerät

- DF₁, DF₂, DFₙ: impulsbreitenmodulierte Steuersignale
- DFM₁ DFM₂, DFMₙ: Rückführsignale
- S₁: Schalter
- S₂: Schalter
- Sₙ: Schalter
- B+₁, B+₂, B+ₙ: Spannungsausgänge
- U_{IST1}, U_{IST2}, U_{ISTn}: Spannungsistwerte

## Patentansprüche

1. Verfahren zur Bereitstellung der Versorgungsspannung für die Verbraucher eines Fahrzeug-Bordnetzes unter Verwendung mehrerer Generatoren (2, 5, 8), denen jeweils eine mindestens einen Endstufentransistor (14, 19, 24) aufweisende Regeleinheit (3, 6, 9) zugeordnet ist, wobei der Endstufentransistor (14,19, 24) jeweils mittels eines impulsbreitenmodulierten Steuersignals (DF₁, DF₂, DFₙ) angesteuert wird, wobei das in einer der Regeleinheiten (3) generierte impulsbreitenmodulierte Steuersignal (DF₁) oder ein daraus abgeleitetes, das Tastverhältnis des impulsbreitenmodulierten Signals beschreibenden Steuersignal den weiteren Regeleinheiten (6,9) zugeführt und zur Ansteuerung der Endstufentransistoren (19,24) dieser weiteren Regeleinheiten verwendet wird und die weiteren Regeleinheiten (6,9) jeweils das ihrem Endstufentransistor (19, 24) zugeführte Steuersignal (DF₁) überwachen und beim Erkennen eines Fehlerfalles auf eine autarke Regelung umschalten, wobei ein in einer der weiteren Regeleinheit (6, 9) generiertes Steuersignal (DF₂, DFₙ) an den jeweils zugehörigen Endstufentransistor (19, 24) weiter geleitet wird.

2. Verfahren nach Anspruch 1, **dadurch gekennzeichnet, dass** das aus dem impulsbreitenmodulierten Steuersignal abgeleitete Steuersignal ein invertiertes oder zeit verschobenes impulsbreitenmoduliertes Steuersignal ist.

3. Verfahren nach Anspruch 1, **dadurch gekennzeichnet, dass** das aus dem impulsbreitenmodulierten Steuersignal abgeleitete Steuersignal ein gefiltertes impulsbreitenmoduliertes Steuersignal ist.

4. Verfahren nach Anspruch 3, **dadurch gekennzeichnet, dass** die weiteren Regeleinheiten (6, 9) zum Erkennen eines Fehlerfalles zusätzlich ein Spannungsistwertsignal überwachen.

5. Vorrichtung zur Bereitstellung der Versorgungsspannung für die Verbraucher eines Fahrzeug-Bordnetzes, mit einem ersten Generator (2), einer dem ersten Generator (2) zugeordneten ersten Regeleinheit (3), die einen ersten Endstufentransistor (14) aufweist, einem zweiten Generator (5) und einer dem zweiten Generator (5) zugeordneten zweiten Regeleinheit (6), die einen zweiten Endstufentransistor (19) aufweist, wobei die Endstufentransistoren (14,19) jeweils mittels eines in der Regeleinheit (3) generierten impulsbreitenmodulierten Steuersignals (DF₁) angesteuert werden, wobei sie eine Verbindung zwischen der ersten (3) und der zweiten Regeleinheit (6) aufweist, über welche das in der ersten Regeleinheit (3) generierte impulsbreitenmodulierte Steuersignal (DF₁)oder ein daraus abgeleitetes, das Tastverhältnis des impulsbreitenmodulierten Signals beschreibendes Steuersignal der zweiten Regeleinheit (6) zugeführt wird und dass in der zweiten Regeleinheit (6) eine Verbindung vorgesehen ist, über welche das in der ersten Regeleinheit generierte impulsbreitenmodulierte Steuersignal (DF₁) oder ein daraus abgeleitetes, das Tastverhältnis des impulsbreitenmodulierten Signals beschreibendes Steuersignal an den zweiten Endstufentransistor (19) weiterleitbar ist und die zweite Regeleinheit (6) eine Schalteinheit (17) aufweist, über welche entweder das in der ersten Regeleinheit (3) zur Verfügung gestellte Steuersignal oder ein in der zweiten Regeleinheit (6) generiertes Steuersignal an den zweiten Endstufentransistor (19) weitergeleitet wird und die zweite Regeleinheit (6) das ihrem Endstufentransistor (19) zugeführte Steuersignal überwacht und beim Erkennen eines Fehlerfalles die Schalteinheit (S₂) derart umschaltet, dass das in der zweiten Regeleinheit (6) generierte Steuersignal an den zweiten Endstufentransistor (19) weitergeleitet wird.

6. Vorrichtung nach Anspruch 5, **dadurch gekennzeichnet, dass** das aus dem impulsbreitenmodulierten Steuersignal abgeleitete Steuersignal ein invertiertes oder zeit verschobenes impulsbreitenmoduliertes Steuersignal ist.

7. Vorrichtung nach Anspruch 5, **dadurch gekennzeichnet, dass** das aus dem impulsbreitenmodulierten Steuersignal abgeleitete Steuersignal ein gefiltertes impulsbreitenmoduliertes Steuersignal ist.

8. Vorrichtung nach Anspruch 6, **dadurch gekennzeichnet, dass** die zweite Regeleinheit (6) zum Erkennen eines Fehlerfalles zusätzlich ein Spannungsistwertsignal (U_{IST2}) überwacht.

9. Vorrichtung nach einem der Ansprüche 5 - 8, **dadurch gekennzeichnet, dass** sie n Generatoren (1, 5, 8) aufweist, wobei gilt: n ≥ 2.

## Claims

1. Method for providing the supply voltage for the loads of a vehicle on-board electrical system using a plurality of generators (2, 5, 8), each of which is assigned a control unit (3, 6, 9) having at least one output stage transistor (14, 19, 24), wherein the output stage transistor (14, 19, 24) is driven in each case by means of a pulse-width-modulated control signal (DF₁, DF₂, DFₙ), wherein the pulse-width-modulated control signal (DF₁) generated in one of the control units (3) or a control signal which is derived therefrom and describes the duty ratio of the pulse-width-modulated signal is fed to the further control units (6, 9) and used for driving the output stage transistors (19, 24) of said further control units, and the further control units (6, 9) in each case monitor the control signal (DF₁) fed to their output stage transistor (19, 24) and switch over to an autonomous control in the event of a fault situation being identified, wherein a control signal (DF₂, DFₙ) generated in one of the further control units (6, 9) is forwarded to the respectively associated output stage transistor (19, 24).

2. Method according to Claim 1, **characterized in that** the control signal derived from the pulse-width-modulated control signal is an inverted or time-shifted pulse-width-modulated control signal.

3. Method according to Claim 1, **characterized in that** the control signal derived from the pulse-width-modulated control signal is a filtered pulse-width-modulated control signal.

4. Method according to Claim 3, **characterized in that** the further control units (6, 9) additionally monitor a voltage actual value signal for the purpose of identifying a fault situation.

5. Device for providing the supply voltage for the loads of a vehicle on-board electrical system comprising a first generator (2), a first control unit (3), which is assigned to the first generator (2) and has a first output stage transistor (14), a second generator (5) and a second control unit (6) which is assigned to the second generator (5) and has a second output stage transistor (19), wherein the output stage transistors (14, 19) are driven in each case by means of a pulse-width-modulated control signal (DF₁) generated in the control unit (3), wherein the device has a connection between the first (3) and the second control unit (6) via which the pulse-width-modulated control signal (DF₁) generated in the first control unit (3) or a control signal which is derived therefrom and describes the duty ratio of the pulse-width-modulated control signal is fed to the second control unit (6), and wherein in the second control unit (6) a connection is provided via which the pulse-width-modulated control signal (DF₁) generated in the first control unit or a control signal which is derived therefrom and describes the duty ratio of the pulse-width-modulated signal can be forwarded to the second output stage transistor (19), and the second control unit (6) has a switching unit (17), via which either the control signal made available in the first control unit (3) or a control signal generated in the second control unit (6) is forwarded to the second output stage transistor (19), and the second control unit (6) monitors the control signal fed to its output stage transistor (19) and, upon identifying a fault situation, switches over the switching unit (S₂) in such a way that the control signal generated in the second control unit (6) is forwarded to the second output stage transistor (19).

6. Device according to Claim 5, **characterized in that** the control signal derived from the pulse-width-modulated control signal is an inverted or time-shifted pulse-width-modulated control signal.

7. Device according to Claim 5, **characterized in that** the control signal derived from the pulse-width-modulated control signal is a filtered pulse-width-modulated control signal.

8. Device according to Claim 6, **characterized in that** the second control unit (6) additionally monitors a voltage actual value signal (U_{actua12}) for the purpose of identifying a fault situation.

9. Device according to any of Claims 5 - 8, **characterized in that** it has n generators (1, 5, 8) wherein the following holds true: n ≥ 2.

## Revendications

1. Procédé pour délivrer la tension d'alimentation aux consommateurs du réseau de bord d'un véhicule en recourant à plusieurs générateurs (2, 5, 8) à chacun desquels est associée une unité de régulation (3, 6, 9) qui présente au moins un transistor (14, 19, 24) d'étage final,
chaque transistor (14, 19, 24) d'étage final étant commandé au moyen d'un signal de commande (DF₁, DF₂, DFₙ) en impulsions de largeur modulée,
le signal de commande (DF₁) en impulsions de largeur modulée produit dans l'une des unités de régulation (3) ou un signal de commande qui en est dérivé et qui décrit le taux d'échantillonnage du signal en impulsions de largeur modulée étant amené aux autres unités (6, 9) de régulation et étant utilisé pour la commande des transistors (19, 24) d'étage final de ces autres unités de régulation,
les autres unités de régulation (6, 9) surveillant chacune le signal de commande (DF₁) qui est amené à leur transistor (19, 24) d'étage final et, en cas de détection d'une situation de défaut, le commutant sur une régulation autonome dans laquelle un signal de commande (DF₂, DFₙ) produit dans l'une des autres unités de régulation (6, 9) est transmis au transistor (19, 24) d'étage final correspondant.

2. Procédé selon la revendication 1, **caractérisé en ce que** le signal de commande dérivé du signal de commande en impulsions de largeur modulée est un signal de commande en impulsions de largeur modulée inversé ou décalé dans le temps.

3. Procédé selon la revendication 1, **caractérisé en ce que** le signal de commande dérivé du signal de commande en impulsions de largeur modulée est un signal de commande en impulsions de largeur modulée filtré.

4. Procédé selon la revendication 3, **caractérisé en ce que** les autres unités de régulation (6, 9) surveillent de plus un signal de valeur effective de tension pour détecter une situation de défaut.

5. Ensemble délivrant la tension d'alimentation aux consommateurs du réseau de bord d'un véhicule et présentant
un premier générateur (2), une première unité de régulation (3) associée au premier générateur (2) et qui présente un premier transistor (14) d'étage final, un deuxième générateur (5) et une deuxième unité de régulation (6) associée au deuxième générateur (5) et qui présente un deuxième transistor (19) d'étage final,
chacun des transistors (14, 19) d'étage final étant commandé au moyen d'un signal de commande (DF₁) en impulsions de largeur modulée produit par l'unité de régulation (3), et
une liaison entre la première unité de régulation (3) et la deuxième unité de régulation (6) par laquelle le signal de commande (DF₁) en impulsions de largeur modulée produit par la première unité de régulation (3) ou un signal de commande (DF₁) qui en est dérivé et qui décrit le taux d'échantillonnage du signal en impulsions de largeur modulée est amené à la deuxième unité de régulation (6) et
une liaison par laquelle le signal de commande (DF₁) en impulsions de largeur modulée produit dans la première unité de régulation ou un signal de commande qui en est dérivé et qui décrit le taux d'échantillonnage du signal en impulsions de largeur modulée peut être transmis au deuxième transistor (19) d'étage final étant prévue dans la deuxième unité de régulation (6),
la deuxième unité de régulation (6) présentant une unité de commutation (17) par laquelle le signal de commande délivré dans la première unité de régulation (3) ou un signal de commande produit dans la deuxième unité de régulation (6) est transmis au deuxième transistor (19) d'étage final,
la deuxième unité de régulation (6) surveillant le signal de commande qui est amené à son transistor (19) d'étage final et, en cas de détection d'une situation de défaut, commutant l'unité de commutation (S₂) de telle sorte que le signal de commande produit dans la deuxième unité de régulation (6) soit transmis au deuxième transistor (19) d'étage final.

6. Ensemble selon la revendication 5, **caractérisé en ce que** le signal de commande dérivé du signal de commande en impulsions de largeur modulée est un signal de commande en impulsions de largeur modulée inversé ou décalé dans le temps.

7. Ensemble selon la revendication 5, **caractérisé en ce que** le signal de commande dérivé du signal de commande en impulsions de largeur modulée est un signal de commande en impulsions de largeur modulée filtré.

8. Ensemble selon la revendication 6, **caractérisé en ce que** la deuxième unité de régulation (6) surveille de plus un signal (U_{IST2}) de valeur effective de tension pour détecter une situation de défaut.

9. Ensemble selon l'une des revendications 5 à 8, **caractérisé en ce qu'**il présente n générateurs (1, 5, 8) avec n ≥ 2.
